# EUROPEAN PATENT SPECIFICATION

(11) **EP 4 474 264 B1**
(45) Date of publication and mention of the grant of the patent: **04.03.2026**
(21) Application number: 24177269.8
(22) Date of filing: 22.05.2024
(51) Int. Cl.: B63B 39/06

(54) **TRIM TAB ACTUATOR**
TRIMMLASCHENAKTUATOR
ACTIONNEUR DE LANGUETTE DE GARNITURE

(30) Priority: 23.05.2023 US 202318322191
(43) Date of publication of application: 11.12.2024
(73) Proprietor: Brunswick Corporation, Mettawa, Illinois 60045 (US)
(72) Inventor: Haney, Trevor R., Jenison, Michigan, 49428 (US); Downey, Kevin T., Rockford, Michigan, 49341 (US)
(74) Representative: Von Rohr Patentanwälte Partnerschaft mbB

(56) References cited:
- US-A1- 2011 126 751
- US-A1- 2014 026 800
- US-A1- 2014 129 062
- US-B2- 7 448 780

## Description

### FIELD

The present disclosure relates to an actuator for a trim tab for installation on boats.

### BACKGROUND

U.S. Patent Application No. 17/716,542, filed April 8, 2022, discloses an electric linear actuator having a housing extending along a longitudinal axis. A spindle is provided in the housing and extends along the longitudinal axis. A rod is coaxially coupled to the spindle and extends from a proximal end located in the housing to a distal end located outside the housing. The rod is movable along the longitudinal axis in response to rotation of the spindle. A circuit board is located in the housing adjacent the proximal end of the rod. The circuit board includes a linear inductive sensor having a linear axis oriented parallel to the longitudinal axis. The linear inductive sensor senses an actual position of the proximal end of the rod.

US 2014/129062 A1 discloses a balance assembly 22 on a stern 29 of a water vehicle with an integrated acting cylinder 21 and a fixed underwater lamp 30 in a housing 31. The housing 31 provided on the stern 29, which covers the acting cylinder 21.

US 7 448 780 B2 discloses a marine light mounting system 10 for attaching a plurality of lights 62, 64 to a boat. The mounting system 10 includes a bracket 12, which is attached to a trim tab 50 on a transom 52 of the boat. The trim tab 50 includes an actuator or a hydraulic cylinder 54 that is used to change the orientation of an adjustable planar surface 56.

### SUMMARY

This Summary is provided to introduce a selection of concepts that are further described below in the Detailed Description. This Summary is not intended to identify key or essential features of the claimed subject matter, nor is it intended to be used as an aid in limiting the scope of the claimed subject matter.

According to one example of the present disclosure, an actuator for a trim tab comprises a housing configured to be coupled to a boat, a rod configured to extend and retract with respect to the housing and configured to be coupled to the trim tab, and a light on the housing. The light is on a top side of the housing such that when the actuator is installed on the boat, the light is configured to be directly visible to a person on the boat who looks down at the actuator from above such that the light is configured to convey information to the person.

According to another example of the present disclosure, a trim tab assembly comprises a trim tab and an actuator as described above.

According to some aspects, the light is integrated into the housing.

According to the invention, the light is embedded within the housing.

According to the invention, when the trim tab assembly is installed on the boat, the light is visible to a person.

According to some aspects, the information conveyed to the person relates to a depth of water in which the boat is operating. According to some aspects, the information relates to an amount of extension of the rod with respect to the housing. According to some aspects, the information is conveyed by way of a number. According to some aspects, the information is conveyed by way of a color.

According to some aspects, the light is configured to indicate a status of at least one of the actuator and the trim tab to which the actuator is coupled.

### BRIEF DESCRIPTION OF THE DRAWINGS

The present disclosure is described with reference to the following Figures. The same numbers are used throughout the Figures to reference like features and like components.
FIG. 1 shows one example of a trim tab assembly not according to the claimed invention.
FIG. 2 shows an actuator and related power and control components of the trim tab assembly.
FIG. 3 shows a trim tab installed on a boat's transom.
FIG. 4 shows two trim tabs installed on the boat's transom and situated at different angles with respect to the transom.
FIG. 5 shows another example of a trim tab assembly not according to the claimed invention, in which the trim tab actuator is backlit.
FIG. 6 shows another example of a trim tab assembly not according to the claimed invention, in which the trim tab actuator is backlit.
FIG. 7 shows an example of a trim tab assembly according to the claimed invention, in which a light is provided on a top side of the trim tab actuator.
FIG. 8 shows another example of a trim tab assembly according to the claimed invention, in which colored lights are used to convey information to a person viewing the trim tab actuator.
FIG. 9 shows another example of a trim tab assembly according to the claimed invention, in which numbers are used to convey information to a person viewing the trim tab actuator.
FIG. 10 shows a system for use with the trim tab assemblies described herein.

### DETAILED DESCRIPTION

Unless otherwise specified or limited, the phrases "at least one of A, B, and C," "one or more of A, B, and C," and the like, are meant to indicate A, or B, or C, or any combination of A, B, and/or C, including combinations with multiple instances of A, B, and/or C. Likewise, unless otherwise specified or limited, the terms "mounted," "connected," "linked," "supported," and "coupled" and variations thereof are used broadly and encompass both direct and indirect mountings, connections, supports, and couplings. Further, unless otherwise specified or limited, "connected" and "coupled" are not restricted to physical or mechanical connections or couplings.

As used herein, unless otherwise limited or defined, discussion of particular directions is provided by example only, with regard to particular embodiments or relevant illustrations. For example, discussion of "top," "bottom," "front," "back," "left," "right," "lateral" or "longitudinal" features is generally intended as a description only of the orientation of such features relative to a reference frame of a particular example or illustration. Correspondingly, for example, a "top" feature may sometimes be disposed below a "bottom" feature (and so on), in some arrangements or embodiments. Additionally, use of the words "first," "second", "third," etc. is not intended to connote priority or importance, but merely to distinguish one of several similar elements from another.

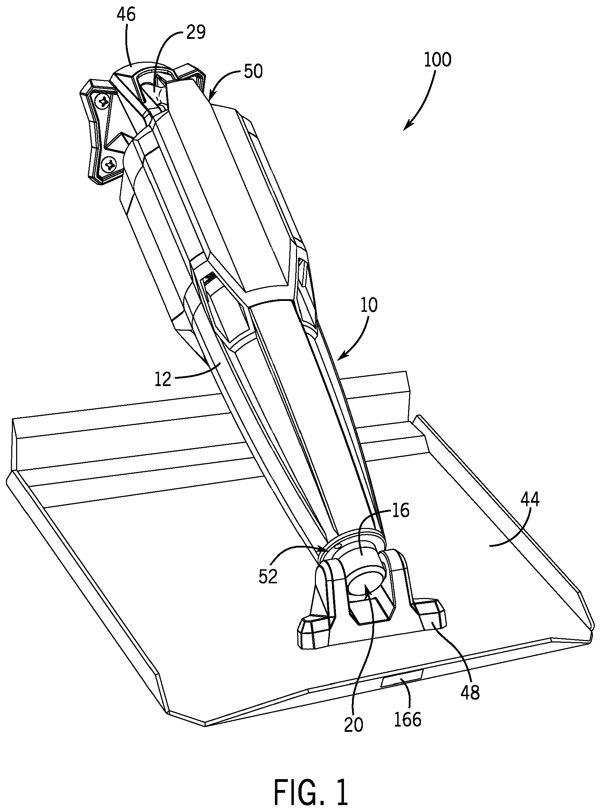

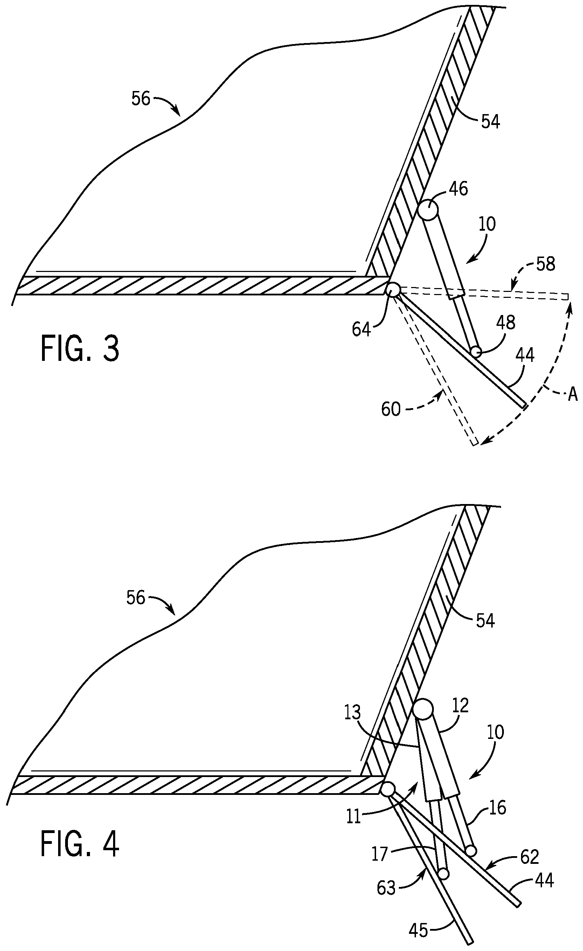

FIG. 1 illustrates a trim tab assembly 100 which is not according to the claimed invention. It comprises a trim tab 44 and an actuator 10 comprising a housing 12 configured to be coupled to a boat (56, FIG. 3) by way of a first bracket 46. The actuator 10 also comprises a rod 16 configured to extend and retract with respect to the housing 12 and configured to be coupled to the trim tab 44 by way of a second bracket 48. As is known, a first end 50 of the housing 12 may comprise a pivot ear that is pivotably coupled to a clevis of the first bracket 46 by way of a pin. The rod 16 extends from a second end 52 of the housing 12 and has a distal end 20 that is pivotably coupled to a clevis of the second bracket 48 by way of a pin. The first bracket 46 may be directly mounted to the transom 54 of the boat 56 (FIG. 3) by way of fasteners such as screws. The second bracket 48 may be directly mounted to the trim tab 44 by way of fasteners such as screws.

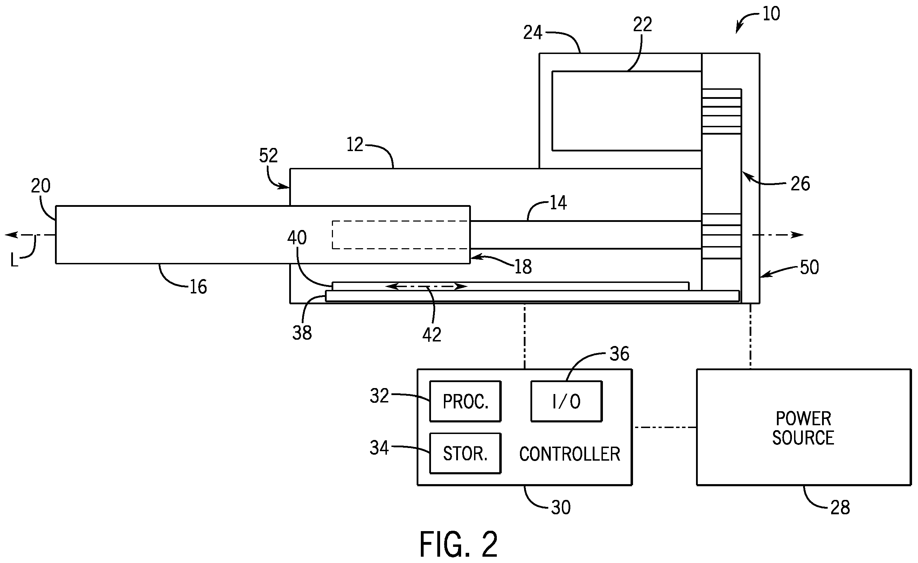

FIG. 2 illustrates one example of the innerworkings of the actuator 10, which is not according to the claimed invention. The actuator 10 includes the housing 12, which extends along a longitudinal axis L. A spindle 14 is provided in the housing 12 and extends along the longitudinal axis L. The rod 16 is coaxially coupled to the spindle 14, such as by way of a ball nut, roller screw, or acme nut (not shown). The rod 16 extends from a proximal end 18 located in the housing 12 to a distal end 20 located outside the housing 12. The rod 16 is movable along the longitudinal axis L in response to rotation of the spindle 14, due to the coupling between the rod 16 and the spindle 14 provided by the ball nut, roller screw, or acme nut.

A motor 22 is configured to rotate the spindle 14. The motor 22 is located in a motor housing 24 adjacent the housing 12. The output shaft of the motor 22 is coupled to the input shaft of the spindle 14 by way of a gear train 26. The motor 22 is provided with power from a power source 28, such as a battery. A controller 30 is configured to control the motor 22, such as by controlling the power provided to the motor 22 from the power source 28. In one example, the controller 30 controls the power to the motor 22 using pulse-width modulation. Note that although the controller 30 and power source 28 are shown as being connected to the housing 12 of the electric linear actuator 10, they are in fact connected to the electrical components inside the housings 12 and 24, and not every signal or power connection is shown herein. Further, although the motor housing 24 is shown as being side-by-side with the actuator housing 12, in other embodiments, the motor 22 is located in a housing that is located along the longitudinal axis L.

The controller 30 includes a processing system 32, a storage system 34 accessible by the processing system 32, and an input/output (I/O) interface 36, which relays information to and from the processing system 32. The processing system 32 can comprise a microprocessor, including a control unit and a processing unit, and other circuitry, such as semiconductor hardware logic, that retrieves and executes software from the storage system 34. The storage system 34 can comprise any storage media readable by the processing system 32 and capable of storing software. The storage system 34 can include volatile and non-volatile, removable and non-removable media implemented in any method or technology for storage of information, such as computer-readable instructions, data structures, software modules, or other data. The processing system 32 loads and executes software from the storage system 34, such as software programmed with a rod positioning algorithm and/or a light configuration algorithm, which direct the processing system 32 to operate as described herein below in further detail. Note that the controller 30 is not shown as being connected to every component in the diagram provided herein, but the controller 30 is in fact directly or indirectly electrically and/or signally connected to each component that it is described as controlling or from which it receives information.

The electric linear actuator 10 also includes a circuit board 38 located in the housing 12 adjacent the proximal end 18 of the rod 16. In this instance, the circuit board 38 extends along a majority of the length of the housing 12. The circuit board 38 comprises a linear inductive sensor 40 having a linear axis 42 oriented parallel to the longitudinal axis L of the housing 12. The linear inductive sensor 40 is configured to sense an actual position of the proximal end 18 of the rod 16. Further details of the linear inductive sensor 40 and the way in which it senses the position of the proximal end 18 of the rod 16 are provided in U.S. Application No. 17/716,542, incorporated by reference herein. In some embodiments, the controller 30 is configured to control the motor 22 based on the actual position of the proximal end 18 of the rod 16. For example, the controller 30 can be programmed to move the rod 16 to another position by activating the motor 22 with a given voltage and/or current for a given time in order to move the rod 16 from a present actual position to a setpoint position according to a rod positioning algorithm.

In other examples, a linear inductive sensor 40 is not provided, and the controller 30 is instead configured to calculate the position of the rod 16 based on the prior provided voltage and/or current and time for which that voltage and/or current was provided to the motor 22. For example, given a known starting position of the rod 16 with respect to the housing 12 (e.g., fully retracted) the controller 30 can map a current provided to the motor 22 and a length of time the current was provided to the motor 22, a voltage provided to the motor 22 and a length of time the voltage was provided to the motor 22, or both the current and voltage and length of time the current and voltage are provided to the motor 22, to a calculated position of the rod 16. For example, the calculated position is determined from a look-up map that accepts current and/or voltage and time as inputs. The map includes calibrated values of how far along the spindle 14 the rod 16 is expected to travel in response to the motor 22 being supplied with a given current and/or voltage for a given length of time. For example, the map relates a given current to a rate of movement of the rod 16 per unit time, which can be multiplied by the time for which the current was provided to determine how far the rod 16 traveled. The controller 30 adds or subtracts this incremental value from the known starting position to obtain a calculated position of the rod 16.

In other examples, rather than measuring or calculating the position of the rod 16 with respect to the spindle 14 and/or housing 12, the controller 30 is provided with information related to the position of the trim tab 44 with respect to the transom 54 of the boat 56. For example, referring to FIG. 3, a trim tab 44 and actuator 10 are shown installed on the transom 54 of a boat 56. Another trim tab may be installed on the opposite side of the transom 54, which trim tab is aligned with the trim tab 44 and therefore hidden from view in FIG. 3. A trim sensor (also known in the art as a "trim sender") may be provided on each trim tab (here, sensor 64 is shown on trim tab 44, and a similar sensor is provided on the other trim tab). In one example, the trim sensor 64 is a Hall Effect sensor that measures the rotational position of the trim tab 44 with respect to the transom 54.

In FIG. 4, two trim tabs 44, 45 and their respective actuators 10, 11 are both shown, as the trim tabs 44, 45 are pivoted to different positions with respect to the transom 54. Those having ordinary skill in the art will appreciate that the trim tabs 44 and 45 can be actuated to different angles with respect to the transom 54 of the boat 56. With reference to FIGURE 3, for example, the trim tabs 44, 45 can be deployed from 0% deployment where they project generally horizontally (position 58), to 100% deployment, where they lie at a calibrated maximum angle A with respect to horizontal (position 60). The calibrated maximum angle A at which the trim tabs 44, 45 are considered 100% deployed can vary based on the specifics of the boat 56 to which the trim tabs 44, 45 are attached. In accordance with the nomenclature provided herein, the trim tabs 44, 45 are less deployed when they lie closer to horizontal (position 58), and are more deployed when they extend at increasingly greater angles to horizontal. Those having ordinary skill in the art are familiar with the use of pivoting trim tabs 44, 45, the position of which with respect to the transom 54 can be adjusted to adjust the attitude of the boat 56. For example, to put the bow of the boat 56 down, both trim tabs 44 and 45 are moved down to the maximum lowered position 60, or "trimmed-down" position. For low power or trailing operation, the trim tabs 44 and 45 are lifted to the maximum raised position 58, or "trimmed-up" position (or, according to the nomenclature provided hereinabove, the zero degree or zero percent position).

At times, it is desirable to deploy one of the trim tabs 44, 45 more or less than the other of the trim tabs 44, 45 in order to affect an attitude of the boat 56. In doing so, the trim tabs 44, 45 will have a "differential" in their deployments, in that one of the trim tabs will be deployed at a value from 0 to 100% that is different than the value of deployment (from 0 to 100%) of the other of the trim tabs. For example, referring to FIGURE 4, trim tab 44 might be at position 62, while trim tab 45 might be at position 63. Such differential deployment may be achieved by extending the rod 16 from the housing 12 of the actuator 10 that is coupled to the trim tab 44 a lesser amount than that by which the rod 17 is extended from the housing 13 of the actuator 11 that is coupled to the trim tab 45. Such differential configurations may be desirable to counteract roll during a turn and/or for waveshaping while the boat 56 is being used for tow sports.

Although the actuators 10, 11 described hereinabove are electric actuators, in other examples, hydraulic actuators may be used. For example, each actuator may comprise a hydraulic cylinder connected to an electro-hydraulic motor or pump that provides hydraulic fluid to the cylinder so as to move the rod (which is connected to a piston) with respect to the cylinder and thereby move the trim tab.

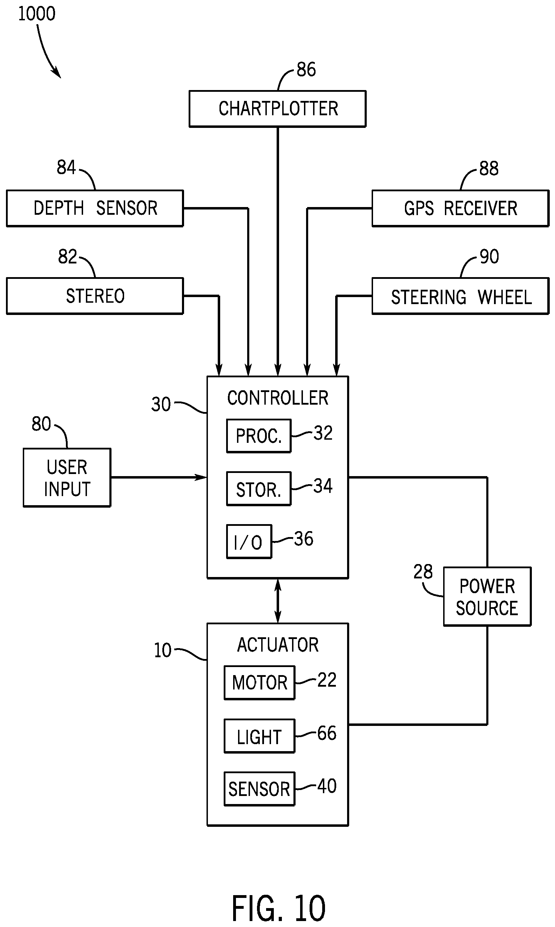

The trim tabs 44, 45 are controlled by the controller 30 in response to inputs to a user input device 80 (FIG. 10). The user input device 80 may be a pair of buttons, switches, or keys. Alternatively, the user input device 80 may be a touch-sensitive display screen with virtual keys. Typically, a given button, switch, or the like corresponds to a given trim tab 44 or 45 and thus a pair of such buttons, switches, or the like may be provided. A user may input a "trim up" command via the user input device 80, in response to which the controller 30 provides power to the actuator 10 to retract the rod 16 into the housing 12. The user may input a "trim down" command via the user input device 80, in response to which the controller 30 provides power to the actuator 10 to extend the rod 16 from the housing 12.

Through research and development, the present inventors discovered that it would be desirable to provide a light on a trim tab assembly for aesthetic and/or informational purposes. Referring briefly back to FIG. 1, the present inventors developed a trim tab assembly 100 in which a light (e.g., light 166) is provided on at least one of the housing 12, the first bracket 46, the second bracket 48, and the trim tab 44.

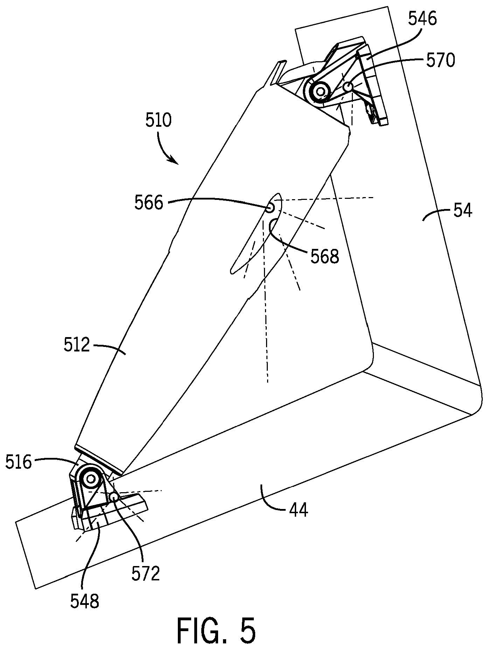

Turning now to FIG. 5, which shows a trim tab assembly not according to the claimed invention, the transom 54 and trim tab 44 are shown schematically. The embodiment of the actuator 510 shown herein includes a housing 512 and a rod 516 attached between the transom 54 and trim tab 44 by way of brackets 546, 548. A light 566 is on the housing 512, and indeed is integrated into the housing 512 by being embedded within the housing 512 on the underside thereof. A cutout 568 in the housing 512 allows the light 566 to be seen from the side of the housing 512, which thus acts as a shroud or sconce. Further, because the light 566 is on the underside of the housing 512, the light 566 is configured to shine on the trim tab 44 and the transom 54. The trim tab 44 can be plated with chrome or another highly reflective material so that the entire trim tab 44 shines when the light 566 is on. Further lights 570, 572 are provided on the first and second brackets 546, 548, respectively. These lights may be integrated into the brackets 546, 548, such as by being embedded therein.

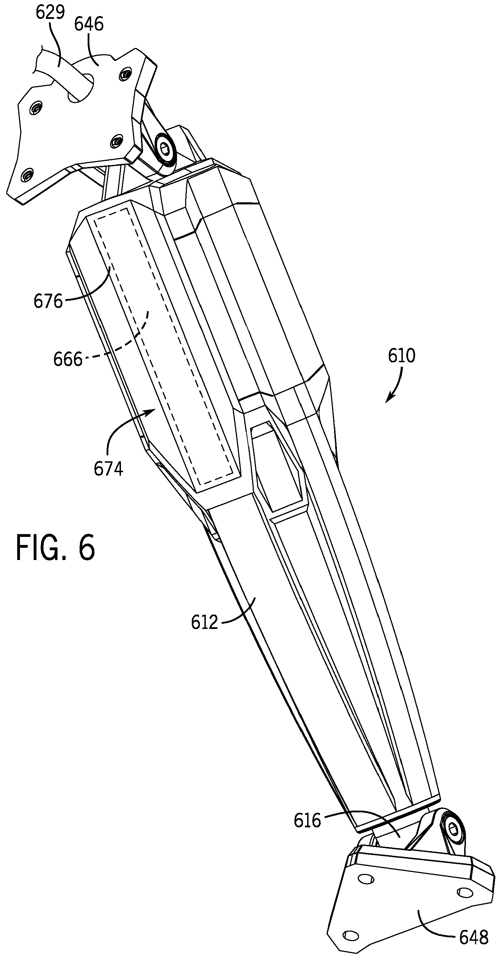

Because the lights on the trim tab assembly will be in a marine environment, it may be desirable to provide a waterproof cover over them. FIG. 6 shows an example of an actuator 610 (not according to the invention) for a trim tab (not shown), including brackets 646, 648, which are like the brackets 46, 48 described hereinabove with respect to FIG. 1. The actuator 610 comprises a housing 612 configured to be coupled to a boat by way of the first bracket 646. The actuator 610 also includes a rod 616 configured to extend and retract with respect to the housing 612 and configured to be coupled to the trim tab by way of the second bracket 648. The actuator 610 also includes a light 666 on the housing 612. The light 666 is embedded within the housing 612 on the underside 674 of the housing 612, such as by being placed within a recess formed in the underside 674 of the housing 612. A transparent cover 676 is provided over the light 666. The transparent cover 676 may be made of plastic and is shaped and sized so as to cover the recess in the housing 612, with an outer side of the transparent cover 676 being flush with the underside 674 of the housing 612. The transparent cover 676 may be sealed to the housing 612 in a waterproof manner.

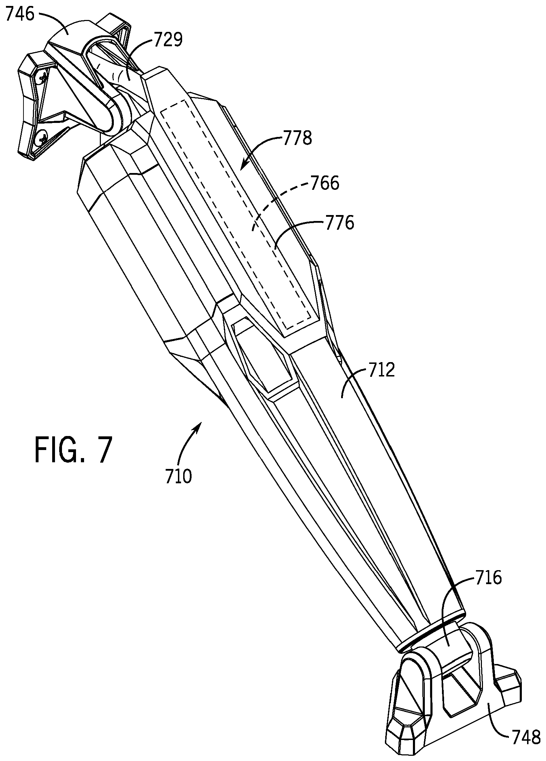

FIG. 7 shows an embodiment of an actuator 710 according to the claimed invention for a trim tab (not shown), including brackets 746, 748, which are like the brackets 46, 48 described hereinabove with respect to FIG. 1. The actuator 710 comprises a housing 712 configured to be coupled to a boat by way of the first bracket 746. The actuator 710 also includes a rod 716 configured to extend and retract with respect to the housing 712 and configured to be coupled to the trim tab by way of the second bracket 748. The actuator 710 also includes a light 766 on the housing 712. The light 766 is embedded within the housing 712 on the top side 778 of the housing 712, being placed within a recess formed in the top side 778 of the housing 712. A transparent cover 776 is provided over the light 766. The transparent cover 776 may be made of plastic and is shaped and sized so as to cover the recess in the housing 712, with an outer side of the transparent cover 776 being flush with the top side 778 of the housing 712. The transparent cover 776 may be sealed to the housing 712 in a waterproof manner. Because the light 766 is provided on the top side 778 of the housing 712, when the actuator 710 is installed on a boat, the light 766 is configured to be directly visible to a person.

According to the invention, the light 766 is visible to a person on the boat who looks down at the actuator 710 from above. The light 766 may alternatively or additionally be visible to a person being towed on skis or a wakeboard behind the boat 56.

In some examples, the light 666, 766 is a light emitting diode (LED) provided on a printed circuit board (PCB). The PCB may be semi-permanently attached to the actuator 610, 710 within a recess formed in the housing 612, 712. The transparent cover 676, 776 snaps in place over the recess in the housing 612, 712. In other examples, the PCB is part of a light module subassembly. The light module subassembly comprises a base plate or housing that supports the PCB and the transparent cover 676, 776 over the PCB. The light module subassembly can be snapped into the recess in the actuator's housing 612, 712, which may provide an appropriate quick connection to electrical power.

In some examples, the lights 566, 570, 572, 666, 766 are purely for aesthetic purposes. However, in other examples, the lights are configured to convey information to the person viewing the lights. In one example, the information relates to a depth of water in which the boat 56 is operating. In another example, the information relates to an amount of extension of the rod 16 of the actuator 10 with respect to the housing 12. There are multiple ways to convey such information, a couple of which are shown herein by way of non-limiting example.

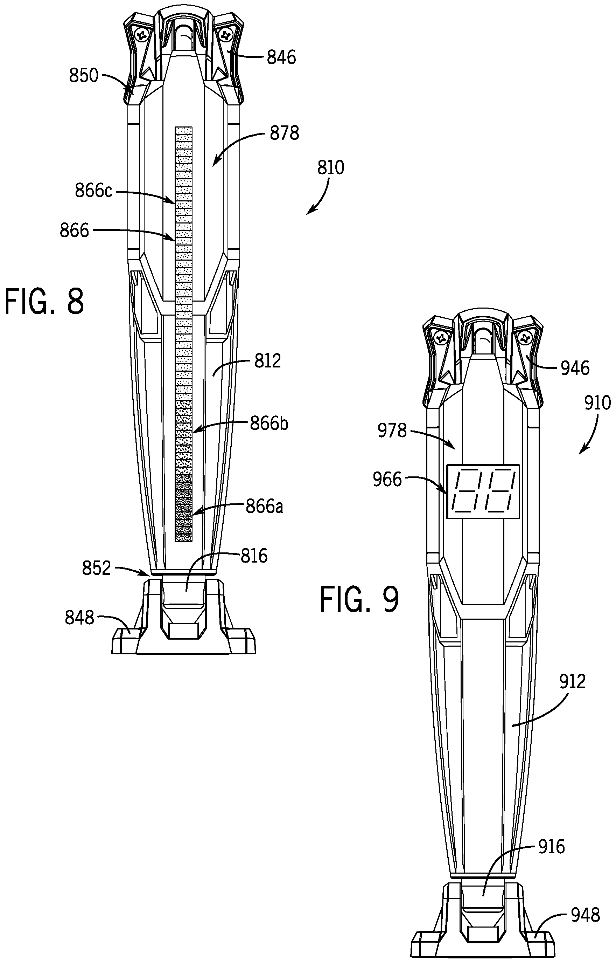

FIG. 8 shows an embodiment according to the claimed invention in which the information is conveyed by way of a color or colors. The housing 812 of the actuator 810 is provided with a series of lights 866 on the top side 878 thereof. The lights may be embedded in the housing 812 under a transparent cover as described hereinabove with respect to FIG. 7. As shown, the lights 866 range in color from a series of red lights 866a near the second end 852 of the housing 812, to a series of orange lights 866b, to a series of green lights 866c near the first end 850 of the housing 812. The different colors may be provided by providing different colored LEDs or by providing white light LEDs with a series of different colored lenses over the LEDs as appropriate. Divisions between each lighted segment may be provided by an opaque frame having cutouts aligned with the lights and situated between the PCB and the transparent cover.

The series of lights 866 may be used to convey information to a person related to a depth of water in which the boat 56 is operating. For example, if the lights 866 are lit into the series of green lights 866c, this may indicate that the water level is deep enough for a person to dive off the boat 56 or for a person to perform a certain tow sports maneuver. If the series of green lights 866c is not lit, but instead the lights 866 are lit only into the series of orange lights 866b, this may indicate to use caution when diving or executing a given tow sports maneuver. If the series of green lights 866c and the series of orange lights 866b are not lit, and the lights 866 are only lit into the series of red lights 866a, this may indicate that diving or a certain tow sports maneuver is not recommended.

In another example, the series of lights 866 can be used to convey information related to an amount of extension of the rod 816 of the actuator 810 with respect to the housing 812. For example, if all the lights in the series of green lights 866c are lit, this may indicate that the rod 816 is fully retracted into the housing 812 (i.e., that the trim tab is fully trimmed up). As the rod 816 extends from the housing 812 (i.e., as the trim tab is trimmed down), each green light in the series will turn off, until only the lights in the series of orange lights 866b and the series of red lights 866a are lit. When the lights in the series of green lights 866c are not lit and the lights in the series of orange lights 866b are lit, this indicates that the rod 816 is nearing the middle-to-end of its allowable extension. When only the lights in the series of red lights 866a are lit, the rod 816 is fully extended. This information can help a person being towed behind the boat understand how much of the full trim extension is available in comparison to the current trim position. Because trim position will affect the type of wake that will be produced, the person can communicate with the operator of the boat to tell the operator to trim the trim tabs up or down to change the wake shape.

In other examples, the lights 866 are all of the same color, and their extent of illumination along the length of the actuator 810 conveys the same information noted above to a person viewing the actuator 810. In still other examples, the lights 866 have varying colors and are not necessarily red, orange, and green.

FIG. 9 shows an actuator 910 according to the claimed invention that is also configured to display information related to a depth of water in which the boat is operating or information related to an amount of extension of the rod 916 of the actuator 910 with respect to the housing 912. However, in this embodiment, the lights 966 convey information by way of a number or numbers. For example, a series of LEDs are lit to show the number "88" in FIG. 9. Those having ordinary skill in the art would understand that the series of LEDs can be lit to form numerals from "0" to "9" in each of the ones and tens places such that numbers from "00" to "99" can be displayed on the top side 978 of the housing 912. The lights 966 can be embedded in the housing 912 and covered with a transparent cover, similar to the example described hereinabove with respect to FIG. 7. The number shown may correspond to a depth of the water in which the boat is operating in a predetermined unit, such as feet or meters. The number may alternatively correspond to the position of the rod 916 with respect to the housing 912, wherein "00" corresponds to a fully retracted rod 916 (i.e., fully trimmed up) and "99" corresponds to a fully extended rod 916 (i.e., fully trimmed down). Any scale can be used for the numbers, such that, for example, the numbers only range from "00" (representing fully trimmed up) to "5" (representing fully trimmed down). This may allow a person being towed behind the boat to lift a hand and indicate with their fingers which setting they want the operator to move the trim tabs to.

The arrangement of lights 866 shown in FIG. 8 could also be used for other purposes. For example, the lights 866 may "bounce" up and down to the tempo of music that is being played on the boat's stereo. Alternatively, a bar of red could indicate that the boat is in very shallow water, a bar of orange could indicate that the boat is in moderately shallow water, and a bar of green could indicate that the boat is in deep water. The "bars" could be formed by multiple LEDs being lit in series behind separate cutouts in a frame installed between the LEDs and the transparent cover.

The lights 966 shown in FIG. 9 could also be used for other purposes. For example, the lights 966 could display a code that the person interprets as meaning one of various things, such as that the boat is in shallow water, that the boat is in weedy water, or that one of the various systems on the boat is experiencing difficulty. The code may optionally flash to catch the person's attention. In still other examples, the lights 966 could be used to form short words to convey a message to a person being towed behind the boat. In still other examples, the lights 966 could be used to form arrows that indicate to the person being towed which way the operator is steering the boat, which may be helpful for maintaining balance during a turn. In still other examples, lit emojis could be used to convey information. For example, a thumbs up emoji or a smiley face emoji could be used to tell a person being towed behind the boat they are doing a good job, that they are in deep water, or that a message they are attempting to convey to the passengers on the boat has been received. Flashing lights and/or a series of colors could also be used to convey information. Flashing lights of one color may signify danger (e.g., a shallow area, weedy area, rocky area), while solid light of another color could signify generally good conditions. A series of colors could be used to communicate increasing or decreasing water depth, increasing or decreasing boat speed, etc. Various combinations of each of the above concepts can be combined in various ways to communicate various information, which the user could interpret using an instruction manual or similar guide. In some examples, the lighting scheme can be programmable by the user, such that the user can select color, which emojis are used, whether numbers or colors are shown, etc.

FIG. 10 illustrates a system that can be integrated with the trim tab assemblies shown and described hereinabove. The system 1000 includes the above-noted actuator 10, which can alternatively be the actuator 510, 610, 710, 810, or 910. The actuator 10 includes a motor 22, described hereinabove with respect to FIG. 2, although the actuator 10 could instead be a hydraulic actuator as noted herein. The actuator 10 also includes a linear inductive sensor 40 for determining the position of the rod 16 with respect to the housing 12, as described hereinabove with respect to FIG. 2, although another type of sensor or an algorithm for determining the extension of the rod or a sensor for determining the position of the trim tab itself could be used. The actuator 10 further includes a light 66, which can alternatively be the light 566, 666, 766, 866, or 966. The actuator 10 is provided with power from the power source 28, such as a battery, by way of a cable 29 (FIG. 1) that extends from the first end 50 of the housing 12, through the first bracket 46 (e.g., see FIG. 6, in which cable 629 extends through bracket 646) and thereafter through a hole in the transom 54 of the boat 56. The same power source 28 is used to both power the motor 22 and illuminate the light 66.

A controller 30 is provided, which was described in detail hereinabove with respect to FIG. 2. Various devices on the boat 56 are in communication with the controller 30 via the input/output interface 36. For example, the system 1000 includes a user input device 80, which may be used to input trim commands to the controller 30 to extend and retract the rod 16 from the housing 12, as described hereinabove. In one example, in response to inputs to the user input device 80, the processing system 32 is configured to carry out a light configuration algorithm stored in the storage system 34 to turn on or off the light 66 or lights on the actuator 10. For example, if the actuator is configured like that in FIG. 8, the controller 30 may illuminate increasingly more lights in the series of lights 866 in response to a "trim up" input and may decrease the number of lights that are illuminated in response to a "trim down" input. If the actuator is configured like that in FIG. 9, the controller 30 may illuminate different configurations of lights to show increasing numbers in response to a "trim up" input and may illuminate different configurations of lights to show decreasing numbers in response to a "trim down" input. In other examples, rather than being configured to turn lights on or off directly in response to inputs to the user input device 80, the controller 30 is configured to use information from the sensor 40 to determine the number and/or configuration of lights that should be lit on the actuator 810 or 910. For example, the storage system 34 may contain a lookup table that correlates a given number and/or configuration of lights to be illuminated to a given position of the rod 816 or 916 with respect to the housing 812 or 912, or to a given position of the trim tab 44 with respect to the transom 54.

The system 1000 may also include a stereo 82. Either the stereo 82 or the controller 30 includes microphones that pick up music being played on the boat 56 and convert the inputs to the microphones to outputs to the lights 66 to make the lights 66 turn on or off and/or to change color. Such a feature may be particularly advantageous when used with the example actuators of FIGS. 5-8.

The system 1000 also includes a depth sensor 84. The depth sensor 84 may be a sonar depth sensor installed on the bottom of the boat 56 or in another location beneath the water. The controller 30 is programmed to receive the depth information and to turn on or off the lights 66 to convey the depth information to a person viewing the actuator 10, for example as described hereinabove with respect to FIGS. 8 and 9. In an example in which the actuator 810 of FIG. 8 is used, the light configuration algorithm stored in the storage system 34 may include a lookup table that relates water depth to the number of lights that are to be lit. In an example in which the actuator 910 of FIG. 9 is used, the light configuration algorithm is configured to show the depth in numerals by illuminating lights in predetermined configurations.

In another example, the system 1000 includes a chartplotter 86 and a GPS receiver 88, which may optionally be integrated into the chartplotter 86. The chartplotter 86 may have bathymetry data stored in its memory, which bathymetry data relates GPS position to water depth. The controller 30 receives the GPS position of the boat 56 from the GPS receiver 88 and looks up the bathymetry data corresponding to that GPS location stored on the chartplotter 86. The controller 30 is programmed to use the retrieved depth information to turn on or off the lights 66 to convey the depth information to a person viewing the actuator 10, for example as described hereinabove with respect to FIGS. 8 and 9. In an example in which the actuator 810 of FIG. 8 is used, the light configuration algorithm stored in the storage system 34 may include a lookup table that relates water depth to the number of lights that are to be lit. In an example in which the actuator 910 of FIG. 9 is used, the light configuration algorithm is configured to show the depth in numerals by illuminating lights in predetermined configurations.

The system 1000 may also include a steering wheel 90. The controller 30 is programmed to receive information from a steering sensor in the steering wheel 90, such as a direction of turn. The light configuration algorithm stored in the storage system 34 is configured to turn the lights 66 on or off to convey the direction of turn information to the person viewing the actuator 10, such as by illuminating the lights in the pattern of an arrow. Such a feature may be particularly advantageous when used with the example actuator of FIG. 9.

Thus, the light or lights 566, 666, 766, 866, 966 on the actuators 510, 610, 710, 810, 910 described hereinabove are configured to indicate a status of at least one of the actuator 510, 610, 710, 810, 910 and the trim tab 44 to which the actuator is coupled. For example, the status of the actuator can be the position of the rod with respect to the housing, which status may be conveyed to the person as described hereinabove with respect to FIGS. 8 and 9. In another example, the status of the actuator may be simply that the actuator is being provided with power to move the rod, which may be practiced using the actuators of FIGS. 5-7. When the actuator 510, 610, or 710 is provided with power to move the rod, the light(s) 566, 570, 572 or 666 or 766 are illuminated. When the rod is stationary, the lights are not lit. The status of the trim tab 44 may be the angle of the trim tab 44 with respect to the transom 54, which may be conveyed in examples in which a sensor is not provided for measuring extension of the rod with respect to the housing, but rather a Hall Effect sensor is provided for directly measuring the angle of the trim tab 44 with respect to the transom 54. The status of the trim tab 44 may be conveyed to the person as described hereinabove with respect to FIGS. 8 and 9.

In some examples not according to the invention in which the light is integrated into the housing 12, the light may be attached to the housing 12 by way of a bezel instead of being embedded under a transparent cover. The housing 12 to which the bezel is attached or into which the light is embedded may be the main body of the actuator itself (i.e., the body that forms the tube in which the rod 16 travels) or may be a cover provided over the main body of the actuator.

In some examples not according to the invention, the light is not integrated with the housing of the actuator.

Instead, the light could be provided within a retrofittable puck that is attachable to the actuator's housing 12 or to the brackets 46, 48, or to the trim tab 44 itself. For example, FIG. 1 shows a light 166 that is in the form of a puck attached to the aft end of the trim tab 44. The puck may be attached to the trim tab 44 via mechanical fasteners such as bolts and/or clips and/or adhesives. The puck may be provided with an independent power source such as its own integrated battery, which may be rechargeable. Alternatively, the puck may be provided with power from the power source 28 by way of a retrofitted cable. The puck may also be provided with a wireless transceiver for communication with the controller 30 such that the controller 30 can turn on and off any light(s) in the puck for aesthetic purposes and/or so as to convey information to a person viewing the puck according to one of the examples provided hereinabove.
and/or so as to convey information to a person viewing the puck according to one of the examples provided hereinabove.

In the above description, certain terms have been used for brevity, clarity, and understanding. No unnecessary limitations are to be inferred therefrom beyond the requirement of the prior art because such terms are used for descriptive purposes and are intended to be broadly construed. The order of method steps or decisions shown in the Figures and described herein are not limiting on the appended claims unless logic would dictate otherwise. It should be understood that the decisions and steps can be undertaken in any logical order and/or simultaneously. The different systems and methods described herein may be used alone or in combination with other systems and methods. Various equivalents, alternatives and modifications are possible within the scope of the appended claims.

## Claims

1. An actuator (810, 910) for a trim tab (44), the actuator (810, 910) comprising:
- a housing (812, 912) configured to be coupled to a boat (56); and
- a rod (816, 916) configured to extend and retract with respect to the housing (812, 912) and configured to be coupled to the trim tab (44);
- a light (866, 966) provided on the housing (812, 912);
wherein the light (866, 966) is embedded in a recess formed in a top side (878, 978) of the housing (812, 912), with a transparent cover (776) provided over the recess such that when the actuator (810, 910) is installed on the boat (56), the light (866, 966) is configured to be directly visible to a person on the boat who looks down at the actuator (810, 910) from above such that the light (866, 966) is configured to convey information to the person.

2. The actuator of claim 1, **characterized in that** the light (866, 966) is integrated into the housing (812, 912).

3. The actuator of claim 2, **characterized in that** the light (866, 966) is embedded within the housing (812, 912).

4. The actuator of any of the preceding claims, **characterized in that** the information relates to a depth of water in which the boat (56) is operating.

5. The actuator of any of the preceding claims, **characterized in that** the information relates to an amount of extension of the rod (816, 916) with respect to the housing (812, 912).

6. The actuator of any of claims 4-5, **characterized in that** the information is conveyed by way of a number.

7. The actuator of any of claims 4-5, **characterized in that** the information is conveyed by way of a color.

8. The actuator of any of the preceding claims, **characterized in that** the light (866, 966) is configured to indicate a status of at least one of the actuator (810, 910) and the trim tab (44) to which the actuator (810, 910) is coupled.

9. A trim tab assembly comprising:
- a trim tab (44);
- the actuator (810, 910) of any of the preceding claims;
- a first bracket (846, 946) configured to couple the housing (812, 912) to a boat (56); and
- a second bracket (848, 948) configured to couple the rod (816, 916) to the trim tab (44).

10. The trim tab assembly of claim 9, **characterized in that** the information relates to a depth of water in which the boat (56) is operating, or wherein the information relates to an amount of extension of the rod (816, 916) with respect to the housing (812, 912).

## Patentansprüche

1. Ein Aktuator (810, 910) für eine Trimmklappe (44), wobei der Aktuator (810, 910) umfasst:
- ein Gehäuse (812, 912), das so konfiguriert ist, dass es mit einem Boot (56) gekoppelt werden kann; und
- eine Stange (816, 916), die so konfiguriert ist, dass sie sich in Bezug auf das Gehäuse (812, 912) ausfahren und einfahren lässt, und die so konfiguriert ist, dass sie mit der Trimmklappe (44) verbunden werden kann;
- eine Leuchte (866, 966), die an dem Gehäuse (812, 912) vorgesehen ist;
wobei
die Leuchte (866, 966) in eine Aussparung eingebettet ist, die in einer Oberseite (878, 978) des Gehäuses (812, 912) ausgebildet ist, wobei eine transparente Abdeckung (776) über der Aussparung vorgesehen ist, so dass wenn der Aktuator (810, 910) auf dem Boot (56) installiert ist, die Leuchte (866, 966) so konfiguriert ist, dass sie für eine Person auf dem Boot, die von oben auf den Aktuator (810, 910) herabblickt, direkt sichtbar ist, so dass die Leuchte (866, 966) so konfiguriert ist, dass sie der Person Informationen übermittelt.

2. Der Aktuator nach Anspruch 1, **dadurch gekennzeichnet, dass** die Leuchte (866, 966) in das Gehäuse (812, 912) integriert ist.

3. Der Aktuator nach Anspruch 2, **dadurch gekennzeichnet, dass** die Leuchte (866, 966) in das Gehäuse (812, 912) eingebettet ist.

4. Der Aktuator nach einem der vorstehenden Ansprüche, **dadurch gekennzeichnet, dass** sich die Informationen auf die Wassertiefe beziehen, in der das Boot (56) fährt.

5. Der Aktuator nach einem der vorstehenden Ansprüche, **dadurch gekennzeichnet, dass** sich die Informationen auf den Ausfahrweg der Stange (816, 916) in Bezug auf das Gehäuse (812, 912) beziehen.

6. Der Aktuator nach einem der Ansprüche 4 bis 5, **dadurch gekennzeichnet, dass** die Informationen in Form einer Zahl übermittelt werden.

7. Der Aktuator nach einem der Ansprüche 4 bis 5, **dadurch gekennzeichnet, dass** die Information durch eine Farbe vermittelt wird.

8. Der Aktuator nach einem der vorstehenden Ansprüche, **dadurch gekennzeichnet, dass** die Leuchte (866, 966) so konfiguriert ist, dass es einen Status von mindestens einem der Aktuatoren (810, 910) und der Trimmklappe (44), mit der der Aktuator (810, 910) gekoppelt ist, anzeigt.

9. Trimklappenanordnung, umfassend:
- eine Trimmklappe (44);
- den Aktuator (810, 910) aus einem der vorstehenden Ansprüche;
- eine erste Halterung (846, 946), die so konfiguriert ist, dass sie das Gehäuse (812, 912) mit einem Boot (56) koppelt; und
- eine zweite Halterung (848, 948), die so konfiguriert ist, dass sie die Stange (816, 916) mit der Trimmklappe (44) verbindet.

10. Die Trimmklappenanordnung nach Anspruch 9, **dadurch gekennzeichnet, dass** sich die Informationen auf die Wassertiefe beziehen, in der das Boot (56) fährt, oder dass sich die Informationen auf den Ausfahrweg der Stange (816, 916) in Bezug auf das Gehäuse (812, 912) beziehen.

## Revendications

1. Actionneur (810, 910) pour un volet compensateur (44), l'actionneur (810, 910) comprenant :
- un boîtier (812, 912) configuré pour être couplé à un bateau (56) ; et
- une tige (816, 916) configurée pour s'étendre et se rétracter par rapport au boîtier (812, 912) et configurée pour être couplée au volet compensateur (44) ;
- une lumière (866, 966) prévue sur le boîtier (812, 912) ;
dans lequel la lumière (866, 966) est encastrée dans un renfoncement formé dans une face supérieure (878, 978) du boîtier (812, 912), avec un couvercle transparent (776) prévu sur le renfoncement de telle sorte que lorsque l'actionneur (810, 910) est installé sur le bateau (56), le voyant lumineux (866, 966) est configuré pour être directement visible par une personne se trouvant sur le bateau qui regarde l'actionneur (810, 910) depuis le haut, de telle sorte que le voyant lumineux (866, 966) est configuré pour transmettre des informations à la personne.

2. L'actionneur selon la revendication 1, **caractérisé en ce que** la lumière (866, 966) est intégrée dans le boîtier (812, 912).

3. L'actionneur selon la revendication 2, **caractérisé en ce que** la lumière (866, 966) est intégrée dans le boîtier (812, 912).

4. Actionneur selon l'une quelconque des revendications précédentes, **caractérisé en ce que** les informations concernent la profondeur de l'eau dans laquelle le bateau (56) navigue.

5. Actionneur selon l'une quelconque des revendications précédentes, **caractérisé en ce que** les informations se rapportent à une valeur d'extension de la tige (816, 916) par rapport au boîtier (812, 912).

6. Actionneur selon l'une quelconque des revendications 4 à 5, **caractérisé en ce que** les informations sont transmises sous forme de nombre.

7. Actionneur selon l'une quelconque des revendications 4 à 5, **caractérisé en ce que** les informations sont transmises au moyen d'une couleur.

8. Actionneur selon l'une quelconque des revendications précédentes, **caractérisé en ce que** la lumière (866, 966) est configurée pour indiquer un état d'au moins l'un parmi l'actionneur (810, 910) et le volet compensateur (44) auquel l'actionneur (810, 910) est couplé.

9. Ensemble de volet compensateur comprenant :
- un volet compensateur (44) ;
- l'actionneur (810, 910) de l'une quelconque des revendications précédentes ;
- un premier support (846, 946) configuré pour coupler le boîtier (812, 912) à un bateau (56) ; et
- un deuxième support (848, 948) configuré pour coupler la tige (816, 916) au volet compensateur (44).

10. L'ensemble de volet compensateur selon la revendication 9, **caractérisé en ce que** les informations se rapportent à la profondeur de l'eau dans laquelle le bateau (56) navigue, ou **en ce que** les informations se rapportent à la longueur d'extension de la tige (816, 916) par rapport au boîtier (812, 912).
